# EUROPEAN PATENT SPECIFICATION

(11) **EP 4 565 528 B1**
(45) Date of publication and mention of the grant of the patent: **05.08.2026**
(21) Application number: 23730811.9
(22) Date of filing: 05.06.2023
(51) Int. Cl.: C01B 32/19, C25B 1/04, C25B 1/135, C25B 11/052, C25B 11/091, C25D 3/12, C25D 7/00, C25D 15/00

(54) **PROCESS OF MANUFACTURING AN ELECTROCATALYST FOR ALKALINE WATER ELECTROLYSIS**
VERFAHREN ZUR HERSTELLUNG EINES ELEKTROKATALYSATORS FÜR DIE ALKALISCHE WASSERELEKTROLYSE
PROCÉDÉ DE FABRICATION D'UN ÉLECTROCATALYSEUR POUR ÉLECTROLYSE ALCALINE DE L'EAU

(30) Priority: 05.08.2022 EP 22189089
(43) Date of publication of application: 11.06.2025
(73) Proprietor: Tata Steel Nederland Technology B.V., 1951 JZ Velsen-Noord (NL)
(72) Inventor: WITTEBROOD, Adrianus, Jacobus, 1970 CA IJmuiden (NL)
(74) Representative: Group Intellectual Property Services
(86) International application number: PCT/EP2023/064991
(87) International publication number: WO 2024/027968

(56) References cited:
- US-A1- 2021 108 317

## Description

### FIELD OF THE INVENTION

This invention relates to a process of manufacturing an electrocatalyst for alkaline water electrolysis. The invention also relates to an electroplating bath for use in the process. Further the invention relates to an alkaline water electrolysis device incorporating an electrocatalyst obtainable by this process.

### BACKGROUND TO THE INVENTION

The production of hydrogen and oxygen from water by water electrolysis is a wellestablished technological process worldwide. The three relevant processes of water electrolysis are distinguished by the electrolyte used, namely alkaline electrolysis with a liquid alkaline electrolyte, acidic PEM electrolysis with a proton-conducting polymer electrolyte membrane, and high-temperature electrolysis with a solid oxide electrolyte.

The most common water electrolysis technology used is via alkaline electrolysis and is characterized by high efficiency and affordable prices. The purity of hydrogen obtained by electrolysis using this type of equipment is very high and ranging from about 99.0% to 99.7%. A typical electrolyser of this type consists of two electrodes immersed in the electrolyte and separated by a membrane. The role of the solution is to maximize ionic conductivity. It contains mostly KOH. The operating temperature of the process ranges from about 40°C to 90°C. A solution of NaCl or NaOH can also be used as the electrolyte, but they are less common. In this type of device water with electrolyte is located on both sides of the electrodes. The cathode and anode are separated by a thin polymeric membrane. This membrane is penetrated by OH- ions, which result from the reaction occurring at the cathode. Hydrogen is obtained from the cathode, and water with a small amount of oxygen from the anode.

Electrocatalysts for alkaline electrolysis is a well-developed technology. In recent decades, with the rise of nanotechnology, a new research trend can be observed in order to develop electrocatalysts further. Theoretically the best electrocatalyst available would be platinum, but due to its extreme high costs it is not the preferred candidate for industrial scale water electrolysis. Traditionally, the most widely used electrode material for alkaline electrolysis is nickel and its alloys, owing to its stability and favourable activity in an alkaline regime. However, the main problem is the deactivation of the catalyst over time with the formation of nickel hydride at the surface due to the high concentration of hydrogen in the cathode side. Recent research has been focused on stabilizing the nickel catalysts against deactivation using multi-catalyst systems with tuned chemical and physical properties. More recently, with support from new nanotechnology developments, new nanostructured electrocatalyst concepts have emerged. The main objectives were to increase the surface area and to provide unique catalytic properties for both hydrogen and oxygen evolution reactions (HER and OER).

HER on Ni with graphene or graphene oxide has been studied for use in alkaline solutions. Research has shown a strongly enhanced electrocatalytic activity of these composites in comparison with Ni alone. Enhanced electroactivity of these composites is explained by good electrical conductivity, large specific surface area, and high activity in adsorption/desorption of hydrogen.

Graphene can be produced from a carbon source by means of mechanical exfoliation, molecular assembly, chemical vapour deposition (CVD) methods, and electrochemically. Graphene produced using electrochemical methods can be of relatively high quality, with minimal hole defects and a tuneable level of oxidation. In the art the graphene or graphite nanoplatelet structures produced by electrochemical exfoliation are commonly separated from the electrolyte by a number of separation techniques, including filtering, centrifugal forces to precipitate the graphene or graphite nanoplatelet structures, collecting the graphene or graphite nanoplatelets structures at the interface of two immiscible solvents, and sedimentation. The electrochemically exfoliated graphene or graphite nanoplatelet structures may be further treated after exfoliation. For example, the materials may be further exfoliated using ultrasonic energy and other techniques known to those skilled in the art to decrease the flake size and number of graphene layers. At this moment the commercial availability of graphene in large volumes is limited and the costs are very high, for example 1 gram of commercial grade pure, 3 nm filtered graphene nano-powder is in a typical price range of about 200-400 Euros.

Challenges remain essentially to increase the throughput in these advanced materials for large-scale and cost-effective (e.g., ideally using only abundant material) electrode construction. Prior art US20210108317 discloses a combination of electrochemical graphite exfoliation followed by electrode electrodeposition of as-produced electroplating bath.

### DESCRIPTION OF THE INVENTION

It is therefore an object of the present invention to provide a cost-effective process of manufacturing an electrocatalyst for alkaline water electrolysis.

This and other objects and further advantages are met or exceeded by the present invention providing a process according to claim 1, an electroplating bath according to claim 12 and an alkaline water electrolysis device according to claim 14, and with preferred embodiments in the dependent claims.

In order to achieve this object, the present invention proposes, in a first aspect, a process of manufacturing an electrocatalyst for alkaline water electrolysis, the method comprising the steps of:
(i) producing an aqueous electrolyte **1** comprising suspended graphene and graphite nanoplatelet structures having a thickness of <100 nm, preferably <50 nm, in an electrochemical cell, wherein the cell comprises: (a) a negative electrode which is graphitic, (b) a positive electrode which is graphitic, (c) an aqueous electrolyte which comprises ions in a solvent, said ions comprising cations and anions, wherein said anions comprise sulphate anions; and wherein the method comprises the step of passing a current through the cell to obtain exfoliated graphene and graphite nanoplatelet structures in the aqueous electrolyte in an amount of more than 5 g/l, and more preferably of more than 10 g/l;
(ii) composing an electroplating bath **2** comprising suspended graphene and graphite nanoplatelet structures having a thickness of <100 nm in an amount of more than 2 g/l, preferably of more than 5 g/l, and more preferably of more than 10 g/l, the electroplating bath **2** comprising of an aqueous solution **3** of nickel sulphate and the aqueous electrolyte **1** comprising the suspended graphene and graphite nanoplatelet structures having a thickness of <100 nm in an amount of more than 5 g/l of step (i), preferably more than 10 g/l, of process step (i); and
(iii) electrodepositing from the electroplating bath **2** a combined layer of Ni or Ni-alloy and graphene and graphite particles on a carrier to form an alkaline water electrolysis electrocatalyst.

In the electrochemical exfoliation of step (i) the graphite evolves to graphene and graphite nanoplatelet structures having a thickness of <100 nm, preferably less than 50 nm, and more preferably less than 20 nm, as sulphate intercalation proceeds.

The term "nanoplatelet" is intended as a substantially flat graphene or graphite particle, with a thickness (z) in the order of nanometres, typically less than 100 nm, and preferably less than 50 nm, and more preferably less than 20 nm, and lateral sizes (x,y) greater than the thickness.

A key feature of the invention is that both the negative electrode and the positive electrode used for the electrochemical exfoliation are graphitic and thereby resulting in a high product yield of graphene and graphite nanoplatelet structures. The process is scalable to allow for the production of graphene and graphite nanoplatelet structures on a large scale. There is no need for using a complex composed electrolyte to establish exfoliation, thereby avoiding the need for example organic ions, Li-ions, Mg-ions, which would otherwise increase the electrochemical exfoliation process' complexity of components, corresponding safety requirements, costs, process waste and by-product handling.

Another key feature of the invention is that each of the aqueous electrolyte **1** and the aqueous solution **3** contain sulphate as one of their main components, with that both aqueous solutions **1, 3** are compatible and can be mixed readily into an Ni or Ni-alloy electroplating bath **2,** preferably an acidic electroplating bath, having suspended graphene and graphite nanoplatelet structures having a thickness of <100 nm in an amount of more than 2 g/l, preferably more than 5 g/l, and more preferably more than 10 g/l, without any technical difficulties or chemical disadvantages. This avoids the need for the intermediate separation of the graphene and graphite nanoplatelet structures from the aqueous electrolyte **1,** saving significant costs and processing time. The aqueous electrolyte **1** may be used directly as feedstock to compose the electroplating bath **2.**

The process according to the invention is a simple process using readily available components already accepted for use in the chemical and metallurgical industry. The process is scalable to industrial scale and can be operated in a continuous way. The resultant electrocatalyst can be manufactured on a large scale, meaning at a scale of square meters and larger. The resultant electrocatalyst can be manufactured in large volumes against fairly low costs.

The inventor has found that the hydrogen evolution reaction (HER) after three voltametric cycles in 1 M KOH of the electrodeposited layer of Ni in combination with the graphene or graphite particles using 1.0 cm² effective geometric surface area is very close to that of platinum such that the resultant electrocatalyst is suitable for use in alkaline water electrolysis, also in an industrial scale alkaline water electrolysis. Ni is a much more abundant material compared to rare-earth metals and other metals like platinum, cobalt, iridium, and molybdenum used for their catalytic capacity.

Compared to some very small scale scientific or academic produced electrocatalysts it may have a slightly lower catalytic capacity or efficiency, but on the other hand it can be massproduced at low costs rendering the electrocatalyst obtained by the invention very suitable and economical attractive for use in industrial scale alkaline water electrolysis.

In an embodiment the electrochemical exfoliation in performed using an aqueous electrolyte 1 having an inorganic salt selected from the group of Na₂SO₄, K₂SO₄, and (NH₄)₂SO₄ as the main source for the sulphate anions. The use of sulphate anions results in efficient exfoliation, whereas for example NH₄Cl or NaNO₃ produce very poor exfoliation and thus very low product yield.

In an embodiment the electrochemical exfoliation is performed using an aqueous electrolyte **1** with sulphate ions in a concentration in a range of 0.4 to 3 M, and preferably in a range of 0.4 to 1.3 M.

In a preferred embodiment the electrochemical exfoliation is performed using an aqueous electrolyte **1** based on sodium sulphate (Na₂SO₄). Sodium sulphate is a commonly accepted component in the chemical industry and is readily available against reasonable costs. Sodium sulphate is also compatible with the subsequent composed electroplating bath for the co-depositing of Ni or Ni-alloy and the graphite evolves to graphene and graphite nanoplatelet structures having a thickness of <100 nm, preferably of <50 nm. Preferably sodium sulphate is present in a concentration of in a range of 0.4 to 3 M, and more preferably in a range of 0.4 to 1.3 M, and most preferably in a range of 0.5 to 1 M.

Good results may be obtained when the electrochemical cell for the electrochemical exfoliation of graphene and graphite nanoplatelets the operating parameters comprise one or more of:-
operating cell temperature in a range of about 10-90°C, preferably about 20-70°C, more preferably about 40-65°C;
pH in the range of about 1 to 5, preferably of about 2 to 4;
current density of about 30 to 100 A/dm², preferably of 60 to 90 A/dm²;
voltage between 10 and 40 V, preferably between 15 to 40 V.

The working potential of the cell will be at least that of the standard potential for reductive intercalation. An overpotential may be used in order to increase the reaction rate and to drive the cations into the galleries of the graphite at the negative electrode. Preferably an overpotential of about 1 mV to 10 V is used against a suitable reference as known by those skilled in the art, more preferably of about 1 mV to 5 V. In cells, with only two terminals, and no reference, a larger potential may be applied across the electrodes but a significant amount of the potential drop will occur over the cell resistance, rather than act as an overpotential at the electrodes. In these cases the potential applied may be up to about 20V or up to about 40V.

The voltage applied across the electrodes may be cycled or swept. In one embodiment, both the electrodes are graphitic and the potential is swept so that electrodes change from positive to negative and vice versa. In this embodiment the cationic exfoliation would occur at both electrodes, depending on the polarity of the electrode during the voltage cycle. In some embodiment, alternating current can be used to allow for both fast intercalations and de-intercalations.

The current density at the negative electrode will be controlled through a combination of the electrode's surface area and overpotential used. The method can also be carried out under current control.

A key feature of the invention is that both the negative electrode and the positive electrode used for the electrochemical exfoliation are graphitic and thereby resulting in a high product yield of graphene and graphite nanoplatelet structures. A wide range of carbon materials can be used, including natural graphite flakes, artificial graphite, highly ordered pyrolytic graphite (HOPG), pitch-based graphite, carbon rod, amorphous carbon, and the feedstock as disclosed in patent document US2018/0179648-A1 published on June 28, 2018,

In an embodiment the suspended graphene and graphite nanoplatelet structures having a thickness of <100 nm, preferably <50 nm, and more preferably of <20 nm, in the electrolyte **1** are subjected to high shear mixing as is known in the art to obtain a homogeneous suspension and it may achieve some further exfoliation.

In an embodiment the suspended graphene and graphite nanoplatelet structures having a thickness of <100 nm, preferably <50 nm, and more preferably of <20 nm, in the electrolyte **1** are further exfoliated by a treatment using ultrasounds. The treatment with ultrasounds is preferably carried out at an energy level from 10 to 200 Wh per gram of exfoliated graphene and graphite obtained in process step (i). More preferably the treatment with ultrasounds is performed at an energy level of from 10 to 100 Wh per gram. The treatment with ultrasounds is performed using apparatus such as commercial ultrasonicators for treating liquids, where the acoustic energy is transmitted to the system by cavitation (i.e. formation and explosion of bubbles) using a sonotrode immersed in the liquid, with wave frequency of around 24 kHz, and with power as defined above.

The electroplating bath **2** for co-depositing a combined layer of Ni or Ni-alloy and graphene and graphite particles on a carrier is composed of: (a) the aqueous electrolyte **1** comprising the sulphate anions and having the suspended graphene and graphite nanoplatelet structures, and (b) an aqueous solution **3** of nickel sulphate suitable for electrodepositing Ni or Ni-alloy particles on a substrate or carrier. As each of the aqueous electrolyte **1** and the aqueous solution **3** contain sulphate as one of their main components, both aqueous solutions **1, 3** are compatible and can be mixed into an electroplating bath **2** within any technical difficulties or disadvantages.

The aqueous mixture **3** comprising the nickel sulphate forms the main source for the co-depositing via electroplating of the combined layer of Ni or Ni-alloy and the graphene and graphite particles on a carrier or a substrate.

In a preferred embodiment the aqueous solution **3** comprises nickel sulphate, nickel chloride and preferably boric acid. In a more preferred embodiment the aqueous solution **3** comprises 10-400 g/l nickel sulphate (Na₂SO₄), 10-150 g/l nickel chloride (NiCl₂), and 5-100 g/l boric acid (H₃BO₃). Such an aqueous solution **3** is also referred to in the art as a Watt's bath, is very good scalable and is used to electroplate metal substrates with a Ni or Ni-alloy layer on an industrial scale, e.g., for Ni-plated battery cases. The Watt's bath is also used on a continuous industrial scale, thus not only in a batch process.

In an embodiment the aqueous solution **3** comprises nickel sulphate, nickel chloride and citrate-gluconate. In a more preferred embodiment the aqueous solution **3** comprises 100-300 g/l nickel sulphate, 10-80 g/l nickel chloride, 10-70 g/l ammonium sulphate ((NH₄)₂SO₄), 50-200 g/l sodium citrate, and 10-50 g/l sodium gluconate. The sodium citrate prevents the formation of solid compounds (nickel salts) within the bath and acts as a pH buffer. This aqueous solution **3** is usable, but is used on a less preferred basis as from a chemical point of view it is more complex compared to a Watt's bath.

The electroplating of the combined layer of Ni or Ni-alloy together with the graphene and graphite on a carrier or substrate to form an electrocatalyst is performed in an electroplating bath **2** comprising nickel sulphate as one of its main components.

Good results may be obtained when in the electroplating process for the deposition the operating parameters comprise one or more of:-
- bath temperature in a range of about 20-70°C, preferably about 40-65°C;
- pH in the range of 1 to 5, preferably of 2 to 5, more preferably of 2 to 4;
- current density of about 0.2-10.0 A/dm², preferably about 0.5 to 5.0 A/dm²;
- plating time 1 to 400 s, preferably 20 to 200 s, more preferably 20 to 150 s;
- plating bath **2** composition comprising:
   - 10-400 g/l nickel sulphate, preferably 200-300 g/l nickel sulphate;
   - 10-150 g/l nickel chloride, preferably 30-60 g/l nickel chloride;
   - optionally 5-100 g/l boric acid, preferably 20-50 g/l boric acid; and
   - at least 2 g/l, preferably at least 5 g/l, and more preferably at least 10 g/l, of graphene and graphite nanoplatelet structures having a thickness of <100 nm, and preferable of <50 nm, and more preferably of <20 nm, and originating from the aqueous electrolyte **1** obtained from process step (i).

Some mild bath agitation may be applied to maintain the nanoplatelet structures suspended. The bath composition may have a low concentration of reagents to prevent coagulation of the suspended graphene and graphite nanoplatelet structures. Suitable reagents are methyl pyrrolidone, dimethyl sulfoxide, and anthraquino-diazonium salt, or cationic surfactants. Apart from the presence of the graphene and graphite nanoplatelet structures having a thickness of <100 nm, such an electroplating process using these operating parameters is often referred to in the art as the Watt's process.

Using these operating parameters results in an electrocatalyst suitable for use in alkaline water electrolysis. The plating process uses readily available chemical components well-known and accepted in the chemical and metallurgical industry. The process can be operated as a batch process. But a further advantage is that it is possible to operate it as a continuous process enabling to production of large volumes, both in numbers and surface area, of electrocatalyst material suitable for alkaline water electrolysis.

In an embodiment the combined layer of Ni or Ni-alloy and graphene and graphite particles electrodeposited from the electroplating bath **2** on a carrier to form an electrocatalyst has a thickness of at least about 0.1µm, and preferably of at least about 0.5µm.

The carrier or deposition substrate is not limiting the invention and can be any material used in the art for anode material in alkaline water electrolysis. For example a nickel sheet, or cold rolled carbon steel (e.g., any of the DC01 to DC07 grades) or stainless steel (e.g., 904L or 905L), and preferably the metal substrate is provided with a thin nickel layer.

In a further aspect the invention is embodied in the electroplating bath **2** composed in step (ii) of the process according to the invention as herein described and claimed. The plating bath **2** comprises graphene and graphite nanoplatelet structures having a thickness of <100 nm, and preferable of <50 nm, and more preferably of <20 nm. The amount of these graphene and graphite nanoplatelet structures is more than 2 g/l, preferably more than 5 g/l, and more preferably more than 10 g/l.

Such an electroplating bath **2** comprising said graphene and graphite nanoplatelet structures of defined size and concentration and composed according to the invention may be advantageously merchantable independent from the process.

In an embodiment of the electroplating bath **2** comprises nickel sulphate as one of it main components.

In an embodiment the electroplating bath **2** has a pH in the range of 1 to 5, preferably of 2 to 5, and more preferably of 2 to 4.

In an embodiment of the electroplating bath **2,** it comprises:
- 10-400 g/l nickel sulphate, preferably 200-300 g/l nickel sulphate; and
- 10-150 g/l nickel chloride, preferably 30-60 g/l nickel chloride; and
- optionally 5-100 g/l boric acid, preferably 20-50 g/l boric acid.

In another embodiment the electroplating bath 2, it comprises 100-300 g/l nickel sulphate, 10-80 g/l nickel chloride, 10-70 g/l ammonium sulphate ((NH₄)₂SO₄), 50-200 g/l sodium citrate, and 10-50 g/l sodium gluconate.

In a further aspect the invention is also embodied an alkaline water electrolysis device comprising at least one electrocatalyst obtainable by the process according to this invention. In an embodiment the alkaline water electrolysis device has 6 or more electrocatalyst plates, and preferably 10 or more electrocatalyst plates. Typically the electrocatalyst plates are distanced about 1 to 5 cm from each other. In an embodiment each electrocatalyst plate in the alkaline water electrolysis device has a surface area of at least about 0.5 m² (e.g., having plate dimensions of 10 by 50 cm or 20 by 50 cm), and preferably of at least about 1.5 m².

The invention will now be illustrated with reference to non-limiting comparative and examples according to the invention.

### EXAMPLES

In accordance with the invention two suspensions of exfoliated graphene and graphite nanoplatelets have been manufactured using electrochemical cells with both the positive and negative electrode either made from graphite SGL plate Sigraflex or both made from a solid graphite rod (from Atotech). The electrochemical cell conditions were: volume 3000 ml, 0.75 M sodium sulphate, current density 45 A/dm², voltage 31 V, temperature 50-55°C, treatment time 4 hours. This resulted in two solutions having about 8.4 g/l graphene and graphite nanoplatelets having a thickness of <100 nm based on the graphite SGL plate Sigraflex electrodes, and about 14.7 g/l graphene and graphite nanoplatelets having a thickness of <100 nm based on the solid graphite rod electrodes.

Based on these two suspensions, two acidic electroplating baths have been composed according to the invention, namely:
Electroplating solution 1: 1000 ml of the suspension having about 8.4 g/l graphene and graphite nanoplatelets having a thickness of <100 nm based on the graphite SGL plate Sigraflex electrodes, together with 250 g nickel sulphate hexa-hydrate, 50 g nickel chloride hexa-hydrate, and 30 g boric acid added.
Electroplating solution 2: 1000 ml of the suspension having about 14.7 g/l graphene and graphite nanoplatelets having a thickness of <100 nm based on the solid graphite rod electrodes, together with 250 g nickel sulphate hexa-hydrate, 50 g nickel chloride hexa-hydrate, and 30 g boric acid added.

Based on these two electroplating baths according to the invention combined layers of nickel and graphene and graphite nanoplatelets structures have been deposited on a carrier made from Ni-plated carbon steel having dimensions of 100x100 mm which has been pre-treated by degreasing and desmutting as is well-known in the art. For both baths the same plating conditions have been used, namely 50°C, current density 5 A/dm², plating time 120 seconds, and resulting in full coverage of the carrier surface and having a layer thickness of 2µm.

The presence of nanosized multi-layer graphene flakes has been demonstrated by Raman spectroscopy and showed a mixture of graphene and graphene-oxide.

Furthermore three comparative acidic electroplating baths or solutions have been prepared for the electrodeposition of a combined layer of Ni and other nanosized particles on a carrier. These comparative baths are based on references suggesting that these have high catalytic activity. These baths had purposive additions of graphite powder, SiC powder and MoS₂ powder respectively; based on commercially available powders. The compositions of the three plating baths were:
Comparative bath 1: 1000 ml demi water, plus 250 g nickel sulphate hexa-hydrate, 50 g nickel chloride hexa-hydrate, 30 g boric acid, and 20 g pure graphite powder (natural, microcrystal grade, APS 2-15 micron, 99.9995% (metals basis), UCP-1-M grade, ultra "F" purity, Lot: 61200828, ThermoFischer (Kandel) GmbH). This suspension was mixed for 2 hours with an high shear mixer.
Comparative bath 2: 1000 ml demi water, plus 250 g nickel sulphate hexa-hydrate, 50 g nickel chloride hexa-hydrate, 30 g boric acid, and 20 g silicon carbide (SiC) powder (beta-phase, nanopowder, 45-45nm APS Powder, S.A. 70-90 m²/g, Lot: R21E078, ThermoFischer (Kandel) GmbH). This suspension was mixed for 2 hours with an high shear mixer.
Comparative bath 3: 1000 ml demi water, plus 250 g nickel sulphate hexa-hydrate, 50 g nickel chloride hexa-hydrate, 30 g boric acid, and 20 g molybdenum disulphide (MoS₂) powder (98%, 325 Mesh Powder). This suspension was mixed for 2 hours with an high shear mixer.

Based on these three baths combined layers of nickel with C or SiC or MoS₂ particles have been deposited on a carrier made from Ni-plated carbon steel having dimensions of 100x100 mm which has been pre-treated by degreasing and desmutting as is well-known in the art. For all three electroplating baths the same plating conditions have been used, namely 50°C, current density 5 A/dm², plating time 120 seconds, and resulting in full coverage of the carrier surface and having a layer thickness of 2µm.

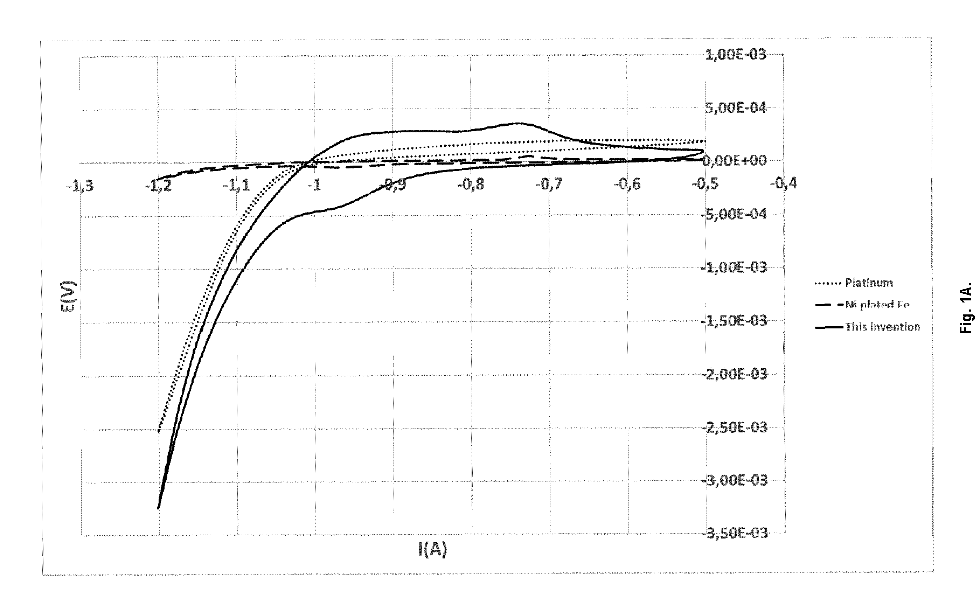

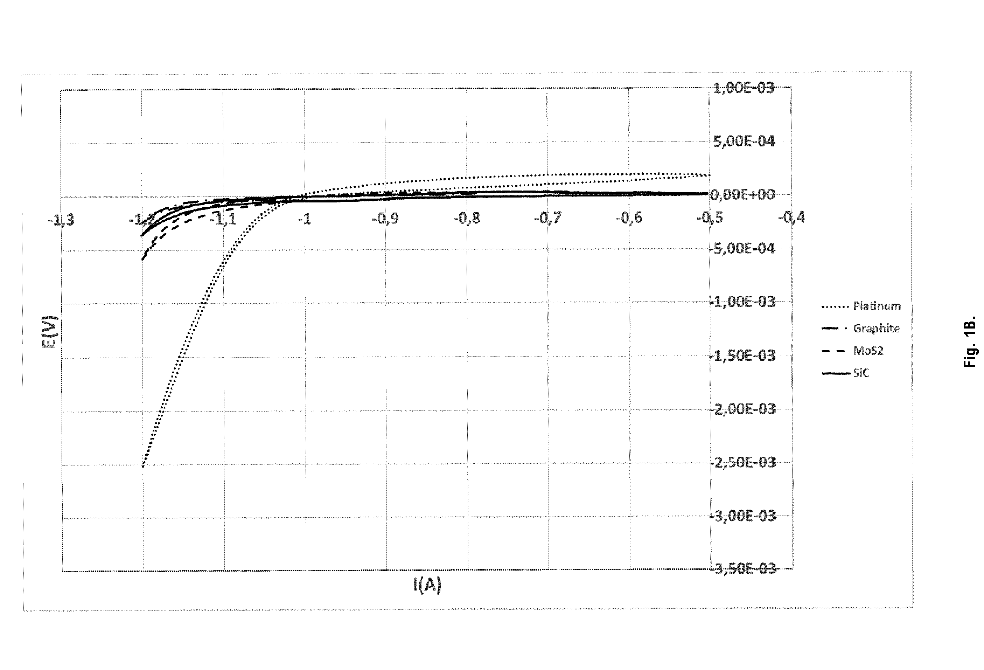

The hydrogen evolution reaction (HER) of the electrodeposited material from electroplating solution 2 and comparative bath 1-3 have been evaluated after three voltametric cycles in 1.0 M KOH solution taking 1.0 cm² effective geometric surface area. The samples have been tested against the bare Ni-plated carrier material and against platinum sheet. The results are shown in Figure 1A and 1B.

In Fig.1A the results are presented for electroplating solution 2 according to the invention against the bare Ni-plated carrier and against platinum. And in Fig.1B the results are presented for comparative baths 1, 2, and 3, against platinum.

From the results of Fig.1A and Fig.1B it can be seen the graphene curve for electroplating solution 2 in accordance with the invention shows a significantly higher HER activity than comparative bath 2 having the pure graphite powder. Furthermore, it can be seen that the shape of the graphene curve (manufactured in accordance with the invention) is almost identical to that of platinum, therefore it is expected that the catalytic activity of the graphene coated sample is almost on par with platinum.

Thus the electrocatalyst produced according to the invention may have a slightly lower catalytic capacity or efficiency compared to platinum, but on the other hand it can be massproduced at low costs rendering the electrocatalyst obtained very suitable and economical attractive for use in industrial scale alkaline water electrolysis.

## Claims

1. A process of manufacturing an electrocatalyst for alkaline water electrolysis, the method comprising the steps of:
(i) producing an aqueous electrolyte (1) comprising suspended graphene and graphite nanoplatelet structures having a thickness of <100 nm in an electrochemical cell, wherein the cell comprises: (a) a negative electrode which is graphitic, (b) a positive electrode which is graphitic, (c) an aqueous electrolyte which comprises ions in a solvent, said ions comprising cations and anions, wherein said anions comprise sulphate anions; and wherein the method comprises the step of passing a current through the cell to obtain exfoliated graphene and graphite nanoplatelet structures in the aqueous electrolyte in an amount of more than 5 g/l, and preferably at least 10 g/l;
(ii) composing an electroplating bath (2) comprising suspended graphene and graphite nanoplatelet structures having a thickness of <100 nm in an amount of more than 2 g/l, the electroplating bath (2) comprising of an aqueous solution (3) of nickel sulphate and the aqueous electrolyte (1) comprising the suspended graphene and graphite nanoplatelet structures having a thickness of <100 nm in an amount of more than 5 g/l, and preferably at least 10 g/l, of step (i);
(iii) electrodepositing from the electroplating bath (2) a combined layer of Ni or Ni-alloy and graphene and graphite particles on a carrier to form an electrocatalyst, preferably an alkaline water electrolysis electrocatalyst.

2. A process according to claim 1, wherein the aqueous electrolyte (1) comprises sulphate anions from an inorganic salt selected from the group of Na₂SO₄, K₂SO₄, and (NH₄)₂SO₄.

3. A process according to claims 1 or 2, wherein the aqueous electrolyte (1) comprises sulphate anions in a range of 0.4 to 3 M, and preferably in a range of 0.4 to 1.3 M.

4. A process according to any one of claims 1 to 3, wherein the aqueous electrolyte (1) comprises sulphate anions from sodium sulphate, and preferably in a range of 0.4 to 3 M, and preferably in a range of 0.4 to 1.3 M.

5. A process according to any one of claims 1 to 4, wherein the aqueous solution (3) comprises nickel sulphate and nickel chloride.

6. A process according to any one of claims 1 to 5, wherein the aqueous solution (3) comprises nickel sulphate, nickel chloride and boric acid.

7. A process according to any one of claims 1 to 6, wherein the aqueous solution (3) comprises 10-400 g/l nickel sulphate, 10-150 g/l nickel chloride, and optionally 5-100 g/l boric acid.

8. A process according to any one of claims 1 to 7, wherein the electroplating bath (2) comprises of the aqueous solution (3) comprising nickel sulphate and of the aqueous electrolyte (1) comprising the suspended graphene and graphite nanoplatelet structures having a thickness <100 nm in an amount of more than 5 g/l, and preferably more than 10 g/l.

9. A process according to any one of claims 1 to 8, wherein the electroplating bath (2) comprises 10-400 g/l nickel sulphate, 10-150 g/l nickel chloride, optionally 5-100 g/l boric acid, and graphene and graphite nanoplatelet structures having a thickness <100 nm in an amount of more than 2 g/l, and preferably of more than 5 g/l.

10. A process according to any one of claims 1 to 9, wherein the electrodepositing from the electroplating bath (2) has one of more of the following operating parameters:
bath temperature in a range of 20-70°C, preferably of 40-65°C;
pH in the range of 1 to 5, preferably of 2 to 5;
current density of 0.2-10.0 A/dm², preferably of 0.5 to 5.0 A/dm²;
plating time 1 to 400 s, preferably 20 to 200 s.

11. A process according to any one of claims 1 to 10, wherein the combined layer of Ni or Ni-alloy and graphene and graphene particles on a carrier electrodeposited in step (iii) has a thickness of at least 0.1µm, and preferably of at least 0.5µm.

12. An electroplating bath (2) composed in step (ii) of any one of claims 1 to 9, having suspended graphene and graphite nanoplatelet structures having a thickness of <100 nm in an amount of more than 2 g/l, the electroplating bath (2) comprising of (a) an aqueous solution (3) of nickel sulphate and (b) the aqueous electrolyte (1) comprising the suspended graphene and graphite nanoplatelet structures having a thickness of <100 nm in an amount of more than 5 g/l, and preferably at least 10 g/l, obtained in step (i).

13. An electroplating plating according to claim 12, comprising
10-400 g/l nickel sulphate, preferably 200-300 g/l nickel sulphate;
10-150 g/l nickel chloride, preferably 30-60 g/l nickel chloride; and
optionally 5-100 g/l boric acid, preferably 20-50 g/l boric acid.

14. An alkaline water electrolysis device comprising an electrocatalyst obtainable by the process according to any one of claims 1 to 11.

15. An alkaline water electrolysis device according to claim 14 comprising at least 6 electrocatalyst plates, and preferably each electrocatalyst plate has a surface area of at least 0.5 m², and preferably of at least 1.5 m².

## Patentansprüche

1. Verfahren zur Herstellung eines Elektrokatalysators für die alkalische Wasserelektrolyse, wobei die Methode die folgenden Schritte umfasst:
(i) Zubereiten eines wässrigen Elektrolyten (1), der suspendierte Graphen- und Graphit-Nanoplättchenstrukturen mit einer Dicke von <100 nm in einer elektrochemischen Zelle umfasst, wobei die Zelle Folgendes umfasst: (a) eine negative Elektrode, welche graphitisch ist, (b) eine positive Elektrode, welche graphitisch ist, (c) einen wässrigen Elektrolyten, welcher Ionen in einem Lösungsmittel umfasst, wobei die Ionen Kationen und Anionen umfassen, wobei die Anionen Sulfatanionen umfassen; und wobei die Methode den Schritt des Leitens eines Stroms durch die Zelle umfasst, um exfolierte Graphen- und Graphit-Nanoplättchenstrukturen in dem wässrigen Elektrolyten in einer Menge von mehr als 5 g/l und vorzugsweise zumindest 10 g/l zu erhalten;
(ii) Zusammensetzen eines Galvanisierungsbades (2), das suspendierte Graphen- und Graphit-Nanoplättchenstrukturen mit einer Dicke von <100 nm in einer Menge von mehr als 2 g/l umfasst, wobei das Galvanisierungsbad (2) eine wässrige Lösung (3) von Nickelsulfat umfasst und der wässrige Elektrolyt (1) die suspendierten Graphen- und Graphit-Nanoplättchenstrukturen mit einer Dicke von <100 nm in einer Menge von mehr als 5 g/l und vorzugsweise zumindest 10 g/l von Schritt (i) umfasst;
(iii) galvanisches Abscheiden einer kombinierten Schicht aus Ni oder Ni-Legierung und Graphen- und Graphitpartikeln auf einem Träger aus dem Galvanisierungsbad (2), um einen Elektrokatalysator zu bilden, vorzugsweise einen alkalischen Wasserelektrolyse-Elektrokatalysator.

2. Verfahren gemäß Anspruch 1, wobei der wässrige Elektrolyt (1) Sulfatanionen aus einem anorganischen Salz umfasst, ausgewählt aus der Gruppe aus Na₂SO₄, K₂SO₄ und (NH₄)₂SO₄.

3. Verfahren gemäß Anspruch 1 oder 2, wobei der wässrige Elektrolyt (1) Sulfatanionen in einem Bereich von 0,4 bis 3 M und vorzugsweise in einem Bereich von 0,4 bis 1,3 M umfasst.

4. Verfahren gemäß einem der Ansprüche 1 bis 3, wobei der wässrige Elektrolyt (1) Sulfatanionen aus Natriumsulfat und vorzugsweise in einem Bereich von 0,4 bis 3 M und vorzugsweise in einem Bereich von 0,4 bis 1,3 M umfasst.

5. Verfahren gemäß einem der Ansprüche 1 bis 4, wobei die wässrige Lösung (3) Nickelsulfat und Nickelchlorid umfasst.

6. Verfahren gemäß einem der Ansprüche 1 bis 5, wobei die wässrige Lösung (3) Nickelsulfat, Nickelchlorid und Borsäure umfasst.

7. Verfahren gemäß einem der Ansprüche 1 bis 6, wobei die wässrige Lösung (3) 10-400 g/l Nickelsulfat, 10-150 g/l Nickelchlorid und optional 5-100 g/l Borsäure umfasst.

8. Verfahren gemäß einem der Ansprüche 1 bis 7, wobei das Galvanisierungsbad (2) die wässrige Lösung (3), die Nickelsulfat umfasst, und den wässrigen Elektrolyten (1) umfasst, der die suspendierten Graphen- und Graphit-Nanoplättchenstrukturen mit einer Dicke <100 nm in einer Menge von mehr als 5 g/l und vorzugsweise mehr als 10 g/l umfasst.

9. Verfahren gemäß einem der Ansprüche 1 bis 8, wobei das Galvanisierungsbad (2) 10-400 g/l Nickelsulfat, 10-150 g/l Nickelchlorid, optional 5-100 g/l Borsäure und Graphen- und Graphit-Nanoplättchenstrukturen mit einer Dicke <100 nm in einer Menge von mehr als 2 g/l und vorzugsweise von mehr als 5 g/l umfasst.

10. Verfahren gemäß einem der Ansprüche 1 bis 9, wobei das galvanische Abscheiden aus dem Galvanisierungsbad (2) einen oder mehrere der folgenden Betriebsparameter aufweist:
Badtemperatur in einem Bereich von 20-70 °C, vorzugsweise von 40-65 °C;
pH im Bereich von 1 bis 5, vorzugsweise von 2 bis 5;
Stromdichte von 0,2-10,0 A/dm², vorzugsweise von 0,5 bis 5,0 A/dm²;
Beschichtungszeit 1 bis 400 s, vorzugsweise 20 bis 200 s.

11. Verfahren gemäß einem der Ansprüche 1 bis 10, wobei die kombinierte Schicht aus Ni oder Ni-Legierung und Graphen und Graphenpartikeln auf einem in Schritt (iii) galvanisch abgeschiedenen Träger eine Dicke von zumindest 0,1 µm und vorzugsweise von zumindest 0,5 µm aufweist.

12. Galvanisierungsbad (2), das in Schritt (ii) nach einem der Ansprüche 1 bis 9 zusammengesetzt ist, mit suspendierten Graphen- und Graphit-Nanoplättchenstrukturen mit einer Dicke von <100 nm in einer Menge von mehr als 2 g/l, wobei das Galvanisierungsbad (2) (a) eine wässrige Lösung (3) von Nickelsulfat und (b) den wässrigen Elektrolyten (1) umfasst, der die suspendierten Graphen- und Graphit-Nanoplättchenstrukturen mit einer Dicke von <100 nm in einer Menge von mehr als 5 g/l und vorzugsweise zumindest 10 g/l umfasst, die in Schritt (i) erhalten werden.

13. Galvanische Beschichtung gemäß Anspruch 12, die Folgendes umfasst
10-400 g/l Nickelsulfat, vorzugsweise 200-300 g/l Nickelsulfat;
10-150 g/l Nickelchlorid, vorzugsweise 30-60 g/l Nickelchlorid; und
optional 5-100 g/l Borsäure, vorzugsweise 20-50 g/l Borsäure.

14. Alkalische Wasserelektrolysevorrichtung, die einen Elektrokatalysator umfasst, der durch das Verfahren gemäß einem der Ansprüche 1 bis 11 erhältlich ist.

15. Alkalische Wasserelektrolysevorrichtung gemäß Anspruch 14, die zumindest 6 Elektrokatalysatorplatten umfasst, und wobei vorzugsweise jede Elektrokatalysatorplatte eine Oberfläche von zumindest 0,5 m² und vorzugsweise von zumindest 1,5 m² aufweist.

## Revendications

1. Processus de fabrication d'un électrocatalyseur pour l'électrolyse alcaline de l'eau, le procédé comprenant les étapes de :
(i) production d'un électrolyte aqueux (1) comprenant des structures de nano-plaquettes de graphène et de graphite en suspension ayant une épaisseur <100 nm dans une cellule électrochimique, ladite cellule comprenant : (a) une électrode négative graphitique, (b) une électrode positive graphitique, (c) un électrolyte aqueux comprenant des ions dans un solvant, lesdits ions comprenant des cations et des anions, lesdits anions comprenant des anions sulfate ; et ledit procédé comprenant l'étape consistant à faire passer un courant à travers la cellule pour obtenir des structures de nano-plaquettes de graphène et de graphite exfoliées dans l'électrolyte aqueux en une quantité supérieure à 5 g/l, et de préférence d'au moins 10 g/l ;
(ii) composition d'un bain d'électrodéposition (2) comprenant des structures de nano-plaquettes de graphène et de graphite en suspension ayant une épaisseur <100 nm en une quantité supérieure à 2 g/l, le bain d'électrodéposition (2) comprenant une solution aqueuse (3) de sulfate de nickel et l'électrolyte aqueux (1) comprenant les structures de nano-plaquettes de graphène et de graphite en suspension ayant une épaisseur <100 nm en une quantité supérieure à 5 g/l, et de préférence d'au moins 10 g/l, de l'étape (i) ;
(iii) électrodéposition à partir du bain d'électrodéposition (2) d'une couche combinée de Ni ou d'un alliage de Ni et de particules de graphène et de graphite sur un support pour former un électrocatalyseur, de préférence un électrocatalyseur d'électrolyse alcaline de l'eau.

2. Processus selon la revendication 1, dans lequel l'électrolyte aqueux (1) comprend des anions sulfate provenant d'un sel inorganique choisi dans le groupe de Na₂SO₄, K₂SO₄ et (NH₄)₂SO₄.

3. Processus selon les revendications 1 ou 2, dans lequel l'électrolyte aqueux (1) comprend des anions sulfate dans une plage de 0,4 à 3 M, et de préférence dans une plage de 0,4 à 1,3 M.

4. Processus selon l'une quelconque des revendications 1 à 3, dans lequel l'électrolyte aqueux (1) comprend des anions sulfate provenant du sulfate de sodium, et de préférence dans une plage de 0,4 à 3 M, et de préférence dans une plage de 0,4 à 1,3 M.

5. Processus selon l'une quelconque des revendications 1 à 4, dans lequel la solution aqueuse (3) comprend du sulfate de nickel et du chlorure de nickel.

6. Processus selon l'une quelconque des revendications 1 à 5, dans lequel la solution aqueuse (3) comprend du sulfate de nickel, du chlorure de nickel et de l'acide borique.

7. Processus selon l'une quelconque des revendications 1 à 6, dans lequel la solution aqueuse (3) comprend 10 à 400 g/l de sulfate de nickel, 10 à 150 g/l de chlorure de nickel et éventuellement 5 à 100 g/l d'acide borique.

8. Processus selon l'une quelconque des revendications 1 à 7, dans lequel le bain d'électrodéposition (2) comprend la solution aqueuse (3) comprenant du sulfate de nickel et l'électrolyte aqueux (1) comprenant les structures de nano-plaquettes de graphène et de graphite en suspension ayant une épaisseur <100 nm en une quantité supérieure à 5 g/l, et de préférence supérieure à 10 g/l.

9. Processus selon l'une quelconque des revendications 1 à 8, dans lequel le bain d'électrodéposition (2) comprend 10 à 400 g/l de sulfate de nickel, 10 à 150 g/l de chlorure de nickel, éventuellement 5 à 100 g/l d'acide borique, et des structures de nano-plaquettes de graphène et de graphite ayant une épaisseur <100 nm en une quantité supérieure à 2 g/l, et de préférence supérieure à 5 g/l.

10. Processus selon l'une quelconque des revendications 1 à 9, dans lequel l'électrodéposition à partir du bain d'électrodéposition (2) présente un ou plusieurs des paramètres opératoires suivants :
température du bain dans une plage de 20 à 70 °C, de préférence de 40 à 65 °C ;
pH dans la plage de 1 à 5, de préférence de 2 à 5 ;
densité de courant de 0,2 à 10,0 A/dm², de préférence de 0,5 à 5,0 A/dm² ;
temps de dépôt de 1 à 400 s, de préférence de 20 à 200 s.

11. Processus selon l'une quelconque des revendications 1 à 10, dans lequel la couche combinée de Ni ou d'un alliage de Ni et de particules de graphène et de graphène sur un support électrodéposé dans l'étape (iii) a une épaisseur d'au moins 0,1 µm, et de préférence d'au moins 0,5 µm.

12. Bain d'électrodéposition (2) composé à l'étape (ii) de l'une quelconque des revendications 1 à 9, comportant des structures de nano-plaquettes de graphène et de graphite en suspension ayant une épaisseur <100 nm en une quantité supérieure à 2 g/l, le bain d'électrodéposition (2) comprenant (a) une solution aqueuse (3) de sulfate de nickel et (b) l'électrolyte aqueux (1) comprenant les structures de nano-plaquettes de graphène et de graphite en suspension ayant une épaisseur <100 nm en une quantité supérieure à 5 g/l, et de préférence d'au moins 10 g/l, obtenu à l'étape (i).

13. Plaquage d'électrodéposition selon la revendication 12, comprenant
10 à 400 g/l de sulfate de nickel, de préférence 200 à 300 g/l de sulfate de nickel ;
10 à 150 g/l de chlorure de nickel, de préférence 30 à 60 g/l de chlorure de nickel ; et
éventuellement 5 à 100 g/l d'acide borique, de préférence 20 à 50 g/l d'acide borique.

14. Dispositif d'électrolyse alcaline de l'eau comprenant un électrocatalyseur pouvant être obtenu par le processus selon l'une quelconque des revendications 1 à 11.

15. Dispositif d'électrolyse alcaline de l'eau selon la revendication 14, comprenant au moins 6 plaques d'électrocatalyseur, et de préférence chaque plaque d'électrocatalyseur présente une surface spécifique d'au moins 0,5 m², et de préférence d'au moins 1,5 m².
